# FASCICULE DE BREVET EUROPEEN

(11) **EP 2 919 941 B1**
(45) Date de publication et mention de la délivrance du brevet: **25.01.2017**
(21) Numéro de dépôt: 13818247.2
(22) Date de dépôt: 12.11.2013
(51) Int. Cl.: B23K 9/013, B23K 10/00, B23K 31/10

(54) **PROCÉDÉ DE DÉCOUPE DE RECTANGLES**
SCHNEIDVERFAHREN FÜR VIERECKE
METHOD FOR CUTTING RECTANGLES

(30) Priorité: 13.11.2012 FR 1203039
(43) Date de publication de la demande: 23.09.2015
(73) Titulaire: Tube City IMS, 13270 Fos Sur Mer (FR)
(72) Inventeur: RIBOT, Christophe, 13410 Lambesc (FR)
(74) Mandataire: Renaud-Goud, Thierry
(86) Numéro de dépôt international: PCT/FR2013/000290
(87) Numéro de publication internationale: WO 2014/076378

(56) Documents cités:
- WO-A1-03/055654
- JP-A- 2006 187 829

## Description

La présente invention concerne un procédé de découpe de rectangles (voir le document WO-A-03/055654).

Il s'agit de découper un très grand nombre de rectangles le plus rapidement possible à partir d'une tôle d'acier.

A titre d'exemple, ces rectangles peuvent être utilisés comme éléments de correction de la composition chimique dans un bain d'acier en fusion. L'homme du métier dénomme couramment « frites » ces rectangles d'acier.

Pour découper ces rectangles, on utilise une installation de découpe. Une telle installation comporte une table de découpe qui constitue un support horizontal. Au-dessus de la table de découpe, un portique supporte un ou plusieurs outils de découpe tels que chalumeaux ou torches à plasma dont la flamme est orientée verticalement de haut en bas. Les outils de coupe sont mobiles sur le portique et c'est leurs déplacements qui permettent de former les découpes requises.

Pour découper une pluralité de rectangles, il faut éviter que l'outil de coupe repasse plusieurs fois au même endroit car cela engendre une perte de temps et une surconsommation d'énergie.

Par ailleurs, lorsque l'outil de coupe est une torche à plasma, il faut éviter, dans la mesure du possible, d'interrompre son fonctionnement car le nombre de mises en service et de mises à l'arrêt de la torche conditionne directement la durée de vie des principaux composants de la tête de découpe :
- buse de protection extérieure,
- protecteur,
- buse de protection intérieure,
- buse de diffusion,
- diffuseur,
- électrode.

Les pièces qui s'usent le plus sont la buse de diffusion et l'électrode. Dans le cas d'une table de découpe conventionnelle, ces pièces ne durent pas plus de trois heures.

La présente invention a ainsi pour objet un procédé de découpe de rectangles optimisé quant à son efficacité et à sa disponibilité.

Selon l'invention, un procédé de découpe de rectangles suivant un chemin de découpe reproduit un motif selon une périodicité axiale, ce motif définissant 2n rectangles identiques ; le procédé est remarquable en ce que le motif qui est continu comporte 4n traits qui alternent entre largeur et longueur du rectangle.

Le fait que le motif soit périodique et continu permet de découper de très nombreux rectangles sans interrompre le fonctionnement de la torche à plasma.

Avantageusement le procédé suit deux chemins de découpe juxtaposés.

On augmente ainsi la cadence en employant deux outils de coupe en parallèle.

Suivant un premier mode de réalisation, les motifs des deux chemins de découpe sont identiques.

Suivant un deuxième mode de réalisation, les deux chemins de découpe sont identiques pour ce qui concerne leurs portions parallèles à l'axe de périodicité.

De préférence, lorsque le nombre n est supérieur à 1, les deux chemins de découpe sont décalés axialement d'une demi période.

Suivant une variante, le nombre n étant impair, les deux chemins de découpe identiques sont axialement en phase.

La présente invention apparaîtra maintenant avec plus de détails dans le cadre de la description qui suit d'exemples de réalisation donnés à titre illustratif en se référant aux figures qui représentant :
- la figure 1, le schéma d'un chemin de découpe basé sur un motif à 2 rectangles,
- la figure 2, le schéma d'un chemin de découpe basé sur un motif à 4 rectangles,
- la figure 3, le schéma d'un chemin de découpe basé sur un motif à 6 rectangles, et
- la figure 4, le schéma d'un chemin de découpe basé sur un motif à 8 rectangles.

L'installation de découpe n'est pas plus détaillée car l'invention s'applique à toute installation connue de l'homme du métier.

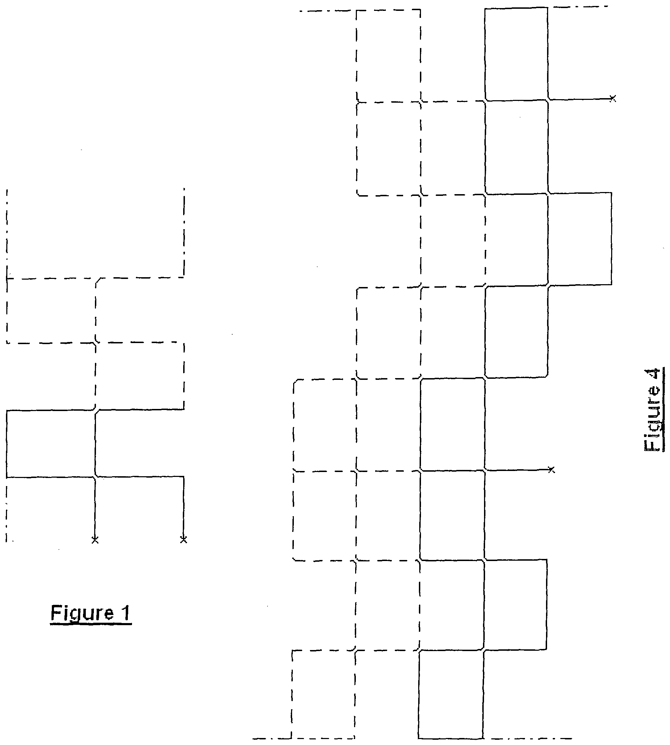

En référence à la figure 1, la tôle à découper est schématisée : ces deux bords sont représentés par des traits tiretés (alternance de tirets et de points). Ces bords sont parallèles à ce que l'on conviendra de dénommer l'axe de la tôle.

Sur la partie gauche de la figure, un premier motif du chemin démarre symboliquement sur une croix et il est représenté en trait plein.

A partir de cette croix :
- on monte suivant une largeur du rectangle,
- on prend à gauche suivant une longueur du rectangle,
- on monte suivant une largeur du rectangle (le long du bord gauche de la tôle), et
- on prend à droite suivant une longueur du rectangle.

Ainsi, le motif qui définit deux rectangles est continu et il comporte 4 traits qui alternent entre largeur et longueur du rectangle.

Le chemin de découpe est périodique et sa période correspond au motif.

Pour faciliter la compréhension, on a dessiné le motif suivant en pointillé.

Le premier chemin de découpe est tracé par un premier outil de coupe.

Il apparaît sur la figure que la largeur de la tôle est égale à deux fois la longueur du rectangle.

On prévoit donc un deuxième chemin de découpe (à droite sur la figure) qui est identique au précédent.

Il est décalé vers la droite d'une longueur de rectangle et il est en phase avec le premier selon l'axe de la tôle.

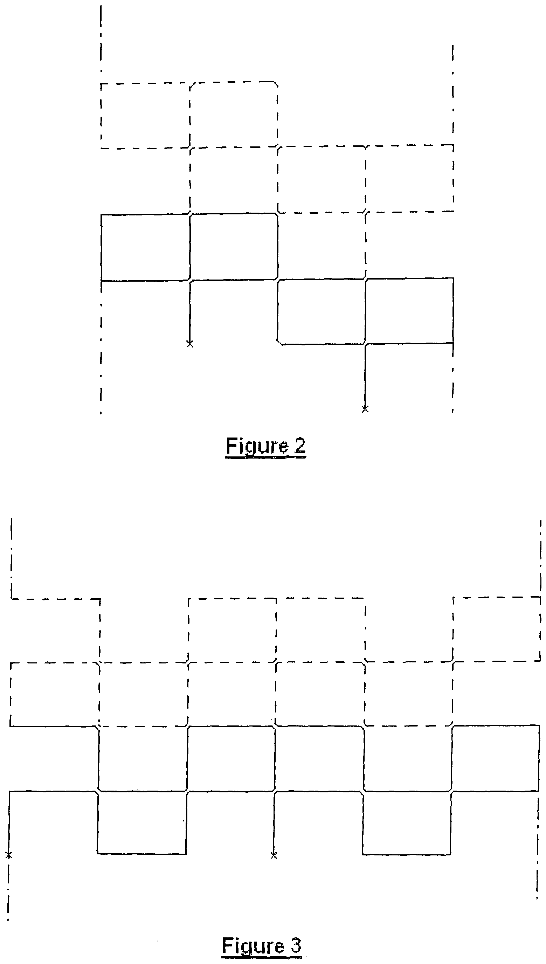

En référence à la figure 2, le motif du chemin de découpe comporte maintenant quatre rectangles. Il est à gauche sur la figure et démarre aussi par une croix.

Toujours en partant de la croix :
- on monte d'une largeur de rectangle,
- on prend à droite sur une longueur de rectangle,
- on monte d'une largeur de rectangle,
- on prend à gauche sur une longueur de rectangle,
- on descend sur une largeur de rectangle,
- on prend à gauche sur une longueur de rectangle,
- on monte sur une largeur de rectangle (le long du bord gauche de la tôle), et
- on prend à droite sur une longueur de rectangle.

Ainsi, le motif est continu et il comporte 8 traits qui alternent entre largeur et longueur du rectangle.

Il apparaît ici que la largeur de la tôle est égale à quatre fois la longueur du rectangle.

On prévoit encore un deuxième chemin de découpe analogue au premier.

Par contre, dans ce cas, le deuxième chemin n'est pas en phase avec le premier ; il est déphasé d'une largeur de rectangle, soit une demi-période du motif. Cet agencement permet de couvrir la totalité de la tôle.

En référence à la figure 3, le motif comprend maintenant six rectangles.

Le premier chemin de découpe est à gauche sur la figure. Le premier motif est en trait plein et le suivant en pointillé.

Le chemin démarre par la croix qui est sur le bord gauche de la tôle :
- on monte d'une largeur de rectangle,
- on prend à droite sur une longueur de rectangle,
- on descend sur une largeur de rectangle,
- on prend à droite sur une longueur de rectangle,
- on monte sur une largeur de rectangle,
- on prend à droite sur une longueur de rectangle,
- on monte sur une largeur de rectangle,
- on prend à gauche sur une longueur de rectangle,
- on descend sur une largeur de rectangle,
- on prend à gauche sur une longueur de rectangle,
- on monte sur une largeur de rectangle, et
- on prend à gauche sur une largeur de rectangle.

Ainsi, le motif est continu et il comporte 12 traits qui alternent entre largeur et longueur du rectangle.

Ici encore, on prévoit un deuxième chemin de découpe à droite du premier, décalé de trois longueurs de rectangles perpendiculairement à l'axe de la tôle.

Les deux chemins de découpe sont ici en phase selon l'axe de la tôle.

En référence à la figure 4, le motif élémentaire comprend maintenant 8 rectangles.

Le chemin de découpe, à gauche démarre toujours par une croix :
- on monte sur une largeur de rectangle,
- on prend à droite sur une longueur de rectangle,
- on monte sur une largeur de rectangle,
- on prend à gauche sur une longueur de rectangle,
- on descend sur une largeur de rectangle,
- on prend à gauche sur une longueur de rectangle,
- on descend sur une largeur de rectangle,
- on prend à gauche sur une longueur de rectangle,
- on monte sur une largeur de rectangle,
- on prend à gauche sur une longueur de rectangle,
- on monte sur une largeur de rectangle (le long du bord gauche de la tôle),
- on prend à droite sur une longueur de rectangle,
- on descend sur une largeur de rectangle,
- on prend à droite sur une longueur de rectangle,
- on monte sur une largeur de rectangle, et
- on prend à droite sur une largeur de rectangle.

Ainsi, le motif est continu et il comporte 16 traits qui alternent entre largeur et longueur du rectangle.

Ici aussi on prévoit un deuxième chemin de découpe décalé latéralement vers la droite de quatre longueurs de rectangle.

Selon l'axe de la tôle, le deuxième chemin est déphasé d'une demi-période (une largeur de rectangle).

Une même installation de découpe peut être prévue pour pouvoir réaliser différents motifs suivant deux chemins de découpe en parallèle. A titre d'exemple, cette installation traite des motifs à 4, à 6 et à 8 rectangles.

Les deux outils de coupe sont libres de se déplacer perpendiculairement à l'axe de la tôle. Par contre, ils sont assujettis au portique, si bien qu'ils suivent un déplacement identique selon l'axe de la tôle, autrement dit selon l'axe de périodicité des motifs.

Du fait de la constitution de l'installation de découpe, il est souhaitable que les deux chemins de découpe présentent un déphasage identique quel que soit le motif adopté. Or, dans les exemples qui précèdent, le deuxième chemin de découpe est déphasé d'une demi-période si n est pair alors qu'il est en phase si n est impair.

Lorsque n est impair et supérieur à 1, on peut prévoir un deuxième chemin de découpe déphasé d'une demi-période par rapport au premier chemin de découpe. Dans ce cas, les motifs des deux chemins diffèrent, bien que leurs portions parallèles à l'axe de la tôle soient identiques.

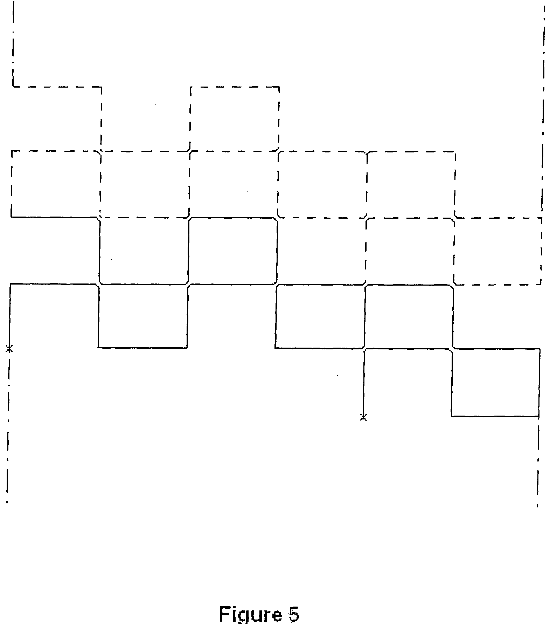

En référence à la figure 5, les motifs des deux chemins de découpe comportent six rectangles.

Le premier chemin de découpe (à gauche sur la figure) est identique à celui de la figure 3, si bien qu'il n'est pas décrit à nouveau.

Le deuxième chemin de découpe à droite du premier est toujours décalé de trois longueurs de rectangle perpendiculairement à l'axe de la tôle. Il est en avance de phase d'une demi-période et il démarre par la croix qui est à droite sur la figure.

Cette croix est décalée de quatre longueurs de rectangles perpendiculairement à l'axe de la tôle et d'une largeur de rectangle suivant cet axe.

A partir de la croix :
- on monte d'une largeur de rectangle,
- on prend à droite sur une longueur de rectangle,
- on descend sur une largeur de rectangle,
- on prend à droite sur une longueur de rectangle,
- on monte sur une largeur de rectangle,
- on prend à gauche sur une longueur de rectangle,
- on monte sur une largeur de rectangle,
- on prend à gauche sur une longueur de rectangle,
- on descend sur une largeur de rectangle,
- on prend à gauche sur une longueur de rectangle,
- on monte sur une largeur de rectangle, et
- on prend à droite sur une longueur de rectangle.

La présente description s'est jusqu'à présent attachée à des motifs de 2, 4, 6 ou 8 rectangles. On pourrait naturellement prévoir des motifs comportant encore plus de rectangles.

En généralisant, un motif à 2n rectangles est continu et il comporte 4n traits qui alternent entre largeur et longueur du rectangle.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, toute étape ou tout moyen décrit peut être remplacé par une étape ou un moyen équivalent sans sortir du cadre de la présente invention.

## Revendications

1. Procédé de découpe de rectangles suivant un chemin de découpe reproduisant un motif selon une périodicité axiale, ce motif définissant 2n rectangles identiques,
procédé **caractérisé en ce que** ledit motif qui est continu comporte 4n traits qui alternent entre largeur et longueur dudit rectangle.

2. Procédé selon la revendication 1, **caractérisé en ce qu'**il suit deux chemins de découpe juxtaposés.

3. Procédé selon la revendication 2, **caractérisé en ce que** les motifs desdits chemins de découpe sont identiques.

4. Procédé selon la revendication 2, **caractérisé en ce que** lesdits deux chemins de découpe sont identiques pour ce qui concerne leurs portions parallèles à l'axe de périodicité.

5. Procédé selon la revendication 2 **caractérisé en ce que**, le nombre n étant supérieur à 1, les deux chemins de découpe sont décalés axialement d'une demi période.

6. Procédé selon l'une quelconque des revendications 2 ou 3 **caractérisé en ce que**, le nombre n étant impair, les deux chemins de découpe identiques sont axialement en phase.

## Patentansprüche

1. Verfahren zum Schneiden von Rechtecken gemäß einem Schneidepfad, der ein Muster gemäß einer axialen Periodizität wiederholt, wobei dieses Muster 2n gleiche Rechtecke definiert,
wobei das Verfahren **dadurch gekennzeichnet ist, dass** das Muster, das fortlaufend ist, 4n Linien aufweist, die zwischen der Breite und der Länge des Rechtecks abwechseln.

2. Verfahren nach Anspruch 1, **dadurch gekennzeichnet, dass** es zwei nebeneinander angeordneten Schneidepfaden folgt.

3. Verfahren nach Anspruch 2, **dadurch gekennzeichnet, dass** die Muster der Schneidepfade gleich sind.

4. Verfahren nach Anspruch 2, **dadurch gekennzeichnet, dass** die zwei Schneidepfade bezüglich ihrer zur Periodizitätsachse parallelen Abschnitte gleich sind.

5. Verfahren nach Anspruch 2, **dadurch gekennzeichnet, dass**, da die Anzahl n größer als 1 ist, die zwei Schneidepfade axial um eine halbe Periode versetzt sind.

6. Verfahren nach einem der Absprüche 2 oder 3, **dadurch gekennzeichnet, dass**, da die Anzahl n ungerade ist, die zwei gleichen Schneidepfade axial in Phase sind.

## Claims

1. A method of cutting out rectangles following a cutting-out path reproducing a pattern with axial periodicity, the pattern defining 2n identical rectangles, and the method being **characterized in that** the pattern, which is continuous, has 4n lines that alternate between the width and the length of said rectangle.

2. A method according to claim 1, **characterized in that** it follows two juxtaposed cutting-out paths.

3. A method according to claim 2, **characterised in that** the patterns of said cutting-out paths are identical.

4. A method according to claim 2, **characterized in that** said two cutting-out paths are identical concerning their portions that are parallel to the periodicity axis.

5. A method according to claim 2, **characterized in that** the number n is greater than 1, and the two cutting-out paths are offset axially by half of one period.

6. A method according to claim 2 or claim 3, characterize in that the number n is odd, and the two identical cutting-out paths are axially in-phase.
